(19) Europäisches Patentamt
European Patent Office
Office européen des brevets

(11) Veröffentlichungsnummer: **0 066 546**
**B1**

# (12) EUROPÄISCHE PATENTSCHRIFT

(45) Veröffentlichungstag der Patentschrift: **18.12.85**

(21) Anmeldenummer: **82810231.9**

(22) Anmeldetag: **27.05.82**

(51) Int. Cl.⁴: **C 08 L 63/00**, C 08 G 59/56, C 08 K 5/10, C 09 D 3/58, C 09 J 3/16

(54) **Ester als Verdünnungsmittel sowie Härtungsbeschleuniger enthaltende Epoxidharzmassen.**

(30) Priorität: **03.06.81 GB 8117065**

(43) Veröffentlichungstag der Anmeldung: **08.12.82 Patentblatt 82/49**

(45) Bekanntmachung des Hinweises auf die Patenterteilung: **18.12.85 Patentblatt 85/51**

(84) Benannte Vertragsstaaten: **DE FR GB IT**

(56) Entgegenhaltungen:
**DE - A - 2 152 606**
**DE - A - 2 459 752**
**GB - A - 1 117 109**

(73) Patentinhaber: **CIBA-GEIGY AG, Klybeckstrasse 141, CH-4002 Basel (CH)**

(72) Erfinder: **Andrews, Christopher Michael, 12 Hope Street, Cambridge CB1 3NA (GB)**

EP 0 066 546 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Vorliegende Erfindung betrifft Massen zum Härten von Epoxidharzen, härtbare Gemische aus diesen Massen und Epoxidharzen sowie gehärtete, durch Härtung der obigen Gemische erhaltene Produkte.

Es ist bekannt, dass Epoxidharze, d.h. Substanzen, die im Durchschnitt mehr als eine 1,2-Epoxidgruppe pro Molekül enthalten, durch Reaktion mit verschiedenen Substanzklassen zu vernetzten, unschmelzbaren, unlöslichen Produkten mit wertvollen technischen Eigenschaften gehärtet werden können. Typische Härter sind unter anderem aliphatische, araliphatische und heterocyclisch-aliphatische Amine, die üblicherweise bei Raumtemperatur eingesetzt werden.

Für verschiedene Anwendungen, insbesondere als Überzüge und Giesslinge, müssen die verwendeten Epoxidharze eine niedrige Viskosität besitzen. Dies erreicht man üblicherweise durch Zusatz von Verdünnungsmitteln wie Dibutylphthalat und Monoglycidyläthern, z.B. Isooctylglycidyläther. Leider verringert der Zusatz solcher Verdünnungsmittel im allgemeinen die Härtungsgeschwindigkeit mit den oben erwähnten Aminen, so dass für die Gelierung der Gemische unerwünscht lange Zeiten erforderlich sind. Es wurde nun gefunden, dass man gewisse Kohlensäureester von Phenolen mit Epoxidharzen vermischen kann, um sowohl die Viskosität der Harze zu erniedrigen als auch die Härtungsgeschwindigkeit mit aliphatischen Aminen bei Raumtemperatur zu beschleunigen.

Ferner wurde gefunden, dass bei Verwendung solcher Ester mit mehr als einer Kohlensäureestergruppe im gleichen Molekül und ferner mit einer langkettigen aliphatischen Gruppe die entstehenden gehärteten Produkte eine erhöhte Biegsamkeit aufweisen.

Aus der britischen Patentschrift Nr. 1 117 109 ist bekannt, dass man vic.-Alkylencarbonate in Epoxidharzmassen einarbeiten kann, wobei die Carbonate als die Viskosität der Massen erniedrigende Lösungsmittel wirken und mit den aliphatischen Aminhärtern unter Bildung von Carbamaten reagieren. Es wird dort darauf hingewiesen, dass bei der Härtung kein Gewichtsverlust einzutreten brauche, und dass keine Entfernung flüchtiger Lösungsmittel nötig sei. Es findet sich jedoch keine Angabe darüber, dass diese Alkylencarbonate eine beschleunigende Wirkung auf die Härtung ausüben.

In der britischen Patentschrift Nr. 921 071 wird der Zusatz von Alkylencarbonaten zu ein Epoxidharz, Cellulosenitrat und einen Härter für das Epoxidharz enthaltenden Gemischen zur Bildung von Substrierlösungen beschrieben. Solche Lösungen werden auf hydrophobe Filmträger mit inerten Oberflächen aufgebracht, damit diese sich mit einer hydrophilen Oberschicht wie einer nichtkräuselnden Schicht oder Silberhalogenidemulsion binden. Ein Effekt der Zugabe dieser Alkylencarbonate auf die Viskosität und Härtungsgeschwindigkeit ist nicht erwähnt.

Die westdeutsche Patentanmeldung Nr. 2 459 752 beschreibt Epoxidpolyaddukte, die durch Erhitzen eines Epoxidharzes mit Cyanamid in Gegenwart einer Carbonsäure oder eines Alkyl- oder Acylesters einer organischen oder anorganischen Säure als Stabilisator hergestellt werden; unter den bevorzugten Estern wird dabei Diphenylcarbonat erwähnt. Wohlbekannterweise bewirkt Cyanamid keine Härtung von Epoxidharzen bei Raumtemperatur; Erhitzen auf z.B. 150°C ist erforderlich, um Härtung innerhalb angemessener Zeit zu erzielen. Die Gegenwart des Stabilisators verlängert die Topfzeit des Epoxidharz-Cyanamidgemischs; diese Zugabe hat somit einen der Beschleunigung der Härtungsgeschwindigkeit entgegengesetzten Effekt.

Nach der japanischen Patentveröffentlichung Nr. 79-155 298 werden Epoxidharze mit Arylestern, insbesondere Polyarylestern, welcher Begriff Arylcarbonate einschliessen soll, heissgehärtet. Die Härtungswirkung lässt sich durch Zugabe von 0,1 bis 10 Gew.% eines tertiären Amins wie Pyridin, Tributylamin und N,N-Dimethylanilin katalysieren. Wohlbekannterweise sind tertiäre Amine keine wirksamen Raumtemperaturhärter für Epoxidharze. Die Wirkung der Zugabe dieser Ester besteht darin, die Topfzeit des Gemischs zu verlängern und somit die Verarbeitbarkeit zu verbessern. In einem Vergleichsbeispiel hatte ein Gemisch aus Epoxidharz, Triacetylphloroglucin und Tributylamin nach 4 Tagen bei 20°C noch nicht reagiert. Der gesuchte Effekt ist der Beschleunigung der Raumtemperaturhärtung von Epoxidharzen entgegengesetzt.

Die nunmehr aufgefundene Beschleunigungswirkung war nicht aus einer Betrachtung der oben erwähnten Patente zu entnehmen, da keine von diesen einen solchen Effekt nahelegte.

Gegenstand dieser Erfindung sind härtbare Massen, die aus (a) einem Ester der Formel

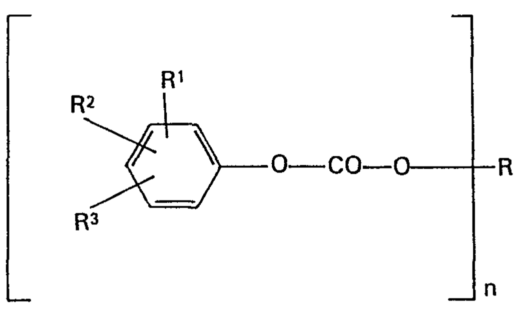

I

worin n eine ganze Zahl von 1 bis 6 ist, R den Rest eines ein- oder mehrwertigen Alkohols oder ein- oder mehrwertigen Phenols nach Wegnahme von n Hydroxylgruppen darstellt sowie $R^1$, $R^2$ und $R^3$, die gleich oder verschieden sein können, je ein Wasserstoff- oder Halogenatom, insbesondere ein Chlor- oder Bromatom, oder eine geradkettige oder verzweigte Alkylgruppe mit 1 bis 10 Kohlenstoffatomen bedeuten, mit der Massgabe, dass ein oder zwei unter $R^1$, $R^2$ und $R^3$ auch für eine Acyloxygruppe mit 1 bis 10 Kohlenstoffatomen stehen können, (b) einem wie weiter unten

definierten aliphatischen Amin und (c) einem Epoxidharz bestehen.

Solche Massen können ferner (d) ein wie weiter unten definiertes aromatisches Amin enthalten. Unter dem in dieser Patentschrift gebrauchten Begriff «aliphatisches Amin» versteht man ein Amin mit mindestens zwei direkt an ein bzw. mehrere Stickstoffatom(e) gebundenen Wasserstoffatomen, wobei das bzw. die Stickstoffatom(e) ihrerseits an ein bzw. mehrere aliphatische (einschliesslich cycloaliphatische) Kohlenstoffatom(e) gebunden sind. Vorzugsweise besitzt das aliphatische Amin mindestens drei solche Wasserstoffatome.

Unter dem hierin angewandten Begriff «aromatisches Amin» versteht man ein Amin, das kein wie oben definiertes «aliphatisches Amin» darstellt, und das mindestens zwei direkt an ein bzw. mehrere Stickstoffatom(e) gebundene Wasserstoffatome trägt, wobei das bzw. die Stickstoffatom(e) direkt an ein bzw. mehrere zu einem aromatischen Ring gehörende Kohlenstoffatom(e) gebunden sind. Vorzugsweise enthält das aromatische Amin drei oder mehr solche Wasserstoffatome.

Gegenstand dieser Erfindung ist weiterhin ein Verfahren zur Härtung eines Epoxidharzes, welches darin besteht, dass man ein Gemisch aus Epoxidharz, einem Ester der Formel I und einer härtenden Menge eines wie oben definierten aliphatischen Amins oder einer härtenden Menge eines solchen Amins zusammen mit einem wie oben definierten aromatischen Amin herstellt und die Masse härten lässt.

Solche Ester der Formel I werden bevorzugt, worin n 1 ist und R für eine Phenyl-, Alkyl-, Phenoxyalkylen- oder Phenoxycarbonyloxyalkylengruppe steht, wobei das Alkyl bzw. die Alkylenteile jeweils 1 bis 10 Kohlenstoffatome aufweisen und geradkettig oder verzweigt sein können und wobei die Phenyl- und Phenoxygruppe bzw. -gruppen im Rahmen der Definition von R gegebenenfalls durch 1 bis 3 unter Halogenatomen, insbesondere Chlor- oder Bromatomen, und geradkettigen oder verzweigten Alkylgruppen mit jeweils 1 bis 3 Kohlenstoffatomen ausgewählten Substituenten substituiert sind, sowie solche, worin n 2 bis 6, vorzugsweise 2 bis 4, ist, und R für einen gesättigten oder ungesättigten aliphatischen Kohlenwasserstoffrest mit einem Molekulargewicht im Bereich von 28 bis 5000, eine Gruppe der Formel

$$R^4 - \left[ -(\text{O-Alkylen})_p - \right]_q \qquad \text{II}$$

oder eine Gruppe der Formel

$$-(\text{Alkylen-CO-O})_p - R^4 - (\text{O-CO-Alkylen})_p - \qquad \text{III}$$

worin jede «Alkylen»-gruppe eine Kette von mindestens 2 und höchstens 6 Kohlenstoffatomen zwischen aufeinanderfolgenden Sauerstoffatomen enthält, $R^4$ eine aliphatische Kohlenwasserstoffgruppe mit 2 bis 6 Kohlenstoffatomen bedeutet sowie p eine solche ganze Zahl, dass die Molekulargewichte der Gruppen der Formeln II und III im Bereich 200 bis 5000 liegen, und q eine ganze Zahl von 2 bis 6 sind, steht.

Besonders bevorzugte, erfindungsgemäss verwendete Ester der Formel I sind solche, worin n 1 ist und R für eine gegebenenfalls durch 2 Bromatome substituierte Phenylgruppe steht, solche, worin n 2 ist und R für Neopentylen, einen Polyoxypropylenrest, insbesondere einen solchen mit einem Molekulargewicht von etwa 1500, oder einen Polybutadienrest, insbesondere einen solchen mit einem Molekulargewicht von etwa 3000, steht, sowie solche, worin n 3 ist und R für Glyceryl oder einen Polyoxypropylentriolrest (d.h. den Rest eines dreiwertigen Alkohols, der ein Addukt aus einem aliphatischen Triol wie Glycerin mit Propylenoxyd darstellt), insbesondere einen solchen mit einem Molekulargewicht von etwa 300, und insbesondere solchen Verbindungen, in denen $R^1$, $R^2$ und $R^3$ für Wasserstoffatome, Chloratome, Bromatome oder Alkylgruppen mit 1 bis 9 Kohlenstoffatomen stehen.

Spezielle Beispiele für solche Ester der Formel I sind Bis-(2,4-dibromphenyl)-carbonat, tert.-Butylphenylcarbonat, 2-Äthylhexyl-p-nonylphenylcarbonat, Bis-(p-nonylphenyl)-carbonat, ein Gemisch von Bis-(isopropylphenyl)-carbonaten mit jeweils durch 1 bis 3 Isopropylgruppen substituierten Phenylringen, Diphenylcarbonat, Bis-(phenoxycarbonyloxy)-polybutadien, Bis-(phenoxycarbonyloxy)-poly-(oxypropylen), Bis-(phenoxycarbonyloxy)-poly-(oxytetramethylen) und Tris-(phenoxycarbonyloxy)-poly-(oxypropylen).

Die in diesen Massen einzusetzenden Epoxidharze sind vorzugsweise solche, die direkt an Sauerstoff-, Stickstoff- oder Schwefelatome gebundene Gruppen der Formel

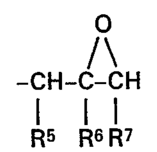

IV

worin entweder $R^5$ und $R^7$ je ein Wasserstoffatom darstellen, in welchem Fall $R^6$ dann ein Wasserstoffatom oder eine Methylgruppe bedeutet, oder $R^5$ und $R^7$ zusammen $-CH_2CH_2-$ darstellen, in welchem Fall $R^6$ dann ein Wasserstoffatom bedeutet, enthalten.

Als Beispiele solcher Harze seien Polyglycidyl- und Poly(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure,

Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure und von aromatischen Polycarbonsäuren wie Phthalsäure, Isophthalsäure und Terephthalsäure ableiten.

Weitere Beispiele sind Polyglycidyl- und Poly-(β-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Äther lassen sich mit Poly-(epichlorhydrin) aus acyclischen Alkoholen wie Äthylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3 und aus Alkoholen mit aromatischen Kernen wie N,N-Bis-(2-hydroxyäthyl)-anilin und p,p'-Bis-(2-hydroxyäthylamino)-diphenylmethan herstellen. Man kann sie ferner aus einkernigen Phenolen wie Resorcin und Hydrochinon sowie mehrkernigen Phenolen wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden wie Formaldehyd, Acetaldehyd, Chloral und Furfurol, mit Phenolen wie Phenol selbst und durch Chloratome oder Alkylgruppen mit jeweils bis zu neun Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan und Bis-(4-methylaminophenyl)-methan erhalten werden, Triglycidylisocyanurat sowie N,N'-Diglycidylderivate von cyclischen Alkylenharnstoffen wie Äthylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen wie Äthan-1,2-dithiol und Bis-(4-mercaptomethylphenyl)-äther.

Beispiele für Epoxidharze mit Gruppen der Formel IV, worin $R^5$ und $R^7$ zusammen eine $-CH_2CH_2-$Gruppe bedeuten, sind Bis-(2,3-epoxycyclopentyl)-äther, 2,3-Epoxycyclopentyl-glycidyläther und 1,2-Bis-(2,3-epoxycyclopentyloxy)-äthan.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidyläther/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3)-propan.

Gewünschtenfalls kann man Epoxidharzgemische verwenden.

Bevorzugte Epoxidharze sind die Polyglycidyläther, Polyglycidylester und N,N'-Diglycidylhydantoine. Speziell bevorzugte Harze sind die Polyglycidyläther des 2,2-Bis-(4-hydroxyphenyl)-propans, des Bis-(4-hydroxyphenyl)-methans oder eines aus Formaldehyd und Phenol oder durch ein Chloratom oder eine Alkylkohlenwasserstoffgruppe mit eins bis neun Kohlenstoffatomen substituiertem Phenol gebildeten Novolak mit einem 0,5 val/kg übersteigenden 1,2-Epoxidgehalt.

Als Beispiele für Härter (b) seien die herkömmlicherweise zur Härtung von Epoxidharzen verwendeten genannt, z.B. n-Butylamin, N,N-Dimethylpropan-1,3-diamin sowie besonders bevorzugt drei oder mehr Aminowasserstoffatome enthaltende Amine wie Diäthylentriamin, Triäthylentetramin und deren 1,2-Propylenanaloge, Hexamethylendiamin und dessen 2,2,4-Trimethyl- und 2,4,4-Trimethylanalog, 4,9-Dioxadodecan-1,12-diamin, m-Xylylendiamin, 3-Aminomethyl-3,5,5-trimethylcyclohexylamin (sonst als Isophorondiamin bekannt), Bis-(4-amino-3-methylcyclohexyl)-methan, 2,2-Bis-(4-aminocyclohexyl)-propan und N-(2-Aminoäthyl)-piperazin. Ebenfalls kommen dabei auf der gleichen Grundlage aus einem solchen Polyamin und einer Dicarbonsäure bzw. einem amidbildenden Derivat dieser hergestellte Aminoamide oder durch Anlagerung von Acrylnitril an ein solches Polyamin erhaltene cyanäthylierte Amine in Frage. Ferner, jedoch weniger bevorzugt, kann man auch Addukte von aliphatischen Polyaminen mit einem stöchiometrischen Unterschuss eines Mono-1,2-epoxids wie Äthylenoxyd oder Propylenoxyd verwenden; das Addukt muss natürlich noch zwei oder mehr Aminowasserstoffatome enthalten.

Beispiele für die gegebenenfalls verwendeten aromatischen Härter (d) sind unter anderem Anilin, o-, m- und p-Phenylendiamin, Bis-(4-aminophenyl)-methan, Anilin/Formaldehydharze, Bis-(4-aminophenyl)-äther, Bis-(4-aminophenyl)-keton, Bis-(4-aminophenyl)-sulfid, Bis-(3-aminophenyl)-sulfon und Bis-(4-aminophenyl)-sulfon.

Das Molverhältnis des aliphatischen Härters (b) zu dem gegebenenfalls verwendeten aromatischen Härter (d) kann in weiten Grenzen variieren, doch liegt bei Verwendung von (d) das Verhältnis im allgemeinen im Bereich von (b):(d) = 1:0,25 bis 4.

Man verwendet eine wirksame, d.h. eine härtende, Menge des Amins. Der Anteil hängt dabei von der chemischen Art des Amins (b) und gegebenenfalls (d) und den gewünschten Eigenschaften der härtbaren Masse und ihres Härtungsprodukts ab; der optimale Anteil lässt sich leicht nach dem Fachmann wohlbekannten Methoden bestimmen. Es wird angenommen, obwohl die Nützlichkeit dieser Erfindung nicht von der Richtigkeit dieser Annahme abhängt, dass der Ester der Formel I mit dem Aminhärter unter Bildung eines Phenols und eines Amids reagiert und das freigesetzte Phenol für die Beschleunigung der Härtung des Epoxidharzes verantwortlich ist. Aus diesem Grund setzt man üblicherweise eine zusätzliche Menge Amin im Überschuss über die zur Umsetzung mit den Epoxidgruppen erforderliche Menge ein, um den Bedarf für das bei der Freisetzung des Phenols verbrauchte Amin zu decken. Beispielsweise wird man normalerweise insgesamt 0,75 bis 4,0 und vorzugsweise 1,0 bis 2,0 Aminowasserstoffäquivalente des Amins (b) und gegebenenfalls (d) pro 1,2-Epoxidäquivalent des Epoxidharzes einsetzen.

Die Menge des Esters der Formel I kann je nach der erwünschten Beschleunigungswirkung und auch der gewünschten Viskosität variieren, doch setzt man üblicherweise 2 bis 50 Gewichtsteile pro 100 Gewichtsteile Epoxidharz ein.

Der Ester der Formel I wird üblicherweise in das Epoxidharz eingearbeitet und dann das Amin (b) und gegebenenfalls das Amin (d) zugesetzt, doch kann man auch den Ester in das Amin (b) und gegebenenfalls das Amin (d) einarbeiten, dann das Epoxidharz dazugeben oder alle drei (bzw. vier) Komponenten gleichzeitig vermischen.

Die Härtung kann bei erhöhten Temperaturen, beispielsweise 30° bis 100°C, stattfinden, doch wird sie normalerweise bei Raumtemperatur, 15 bis 25°C, durchgeführt.

Die neuartigen Massen können ferner Zusatzstoffe enthalten, wie Füllstoffe, Verstärkungsstoffe, Farbmittel, Verlaufmittel, Flammhemmstoffe und Formentrennmittel. Als Streckmittel, Füllstoffe und Verstärkungsstoffe eignen sich beispielsweise Glasfasern, Kohlenstoffasern, Glaskügelchen, Glimmer, Quarzpulver, Calciumcarbonat, Cellulose, Kaolin, Wollastonit, kolloidale Kieselsäure mit grosser spezifischer Oberfläche, gepulvertes Polyvinylchlorid und gepulverte Polyolefinkohlenwasserstoffe wie Polyäthylen und Polypropylen.

Die erfindungsgemässen härtbaren Massen sind als Laminierharze, Anstriche und Lacke, Tränk- und Giessharze, elektrotechnische Einbettungs- und Isoliermassen und als Klebstoffe sowie bei der Herstellung solcher Produkte verwendbar.

Sie können als Zweikomponentenpackung geliefert werden, wobei ein Teil das Epoxidharz und den Ester der Formel I und der andere Teil den Aminhärter (b) gegebenenfalls mit (d) enthält.

Die nachfolgenden Beispiele erläutern die Erfindung; Teile und Prozentangaben sind dabei Gewichtsteile und Gewichtsprozente. Der Beschleunigungseffekt wird wie in diesem Gebiet üblich als die Verkürzung der zur Gelierung der Masse vor der Härtung erforderlichen Zeit angegeben; die Gelierzeiten wurden mittels einer von Techne (Cambridge) Limited, Duxford, Cambridge, England, gelieferten «Techne»-Gelierungsuhr bestimmt. Die Viskosität wurde mit einem Brookfield Viskosimeter unter Verwendung von Spindel Nr. 3 bei 6 U.p.M. gemessen.

«Epoxidharz I» bedeutet einen Polyglycidyläther des 2,2-Bis-(4-hydroxyphenyl)-propans mit einem 1,2-Epoxidgehalt von 5,16 val/kg.

«Epoxidharz II» bedeutet das N,N,N',N'-Tetraglycidylderivat des 4,4'-Diaminodiphenylmethans mit einem 1,2-Epoxidgehalt von 8,0 val/kg.

«Epoxidharz III» bedeutet N,N'-Diglycidyl-5,5-dimethylhydantoin.

«Epoxidharz IV» bedeutet Diglycidyl-hexahydrophthalat mit einem 1,2-Epoxidgehalt von 6,5 val/kg.

«Amin I» bedeutet ein handelsübliches Gemisch ungefähr äquimolarer Anteile von 2,2,4-Trimethylhexamethylendiamin und 2,4,4-Trimethylhexamethylendiamin.

«Amin II» bedeutet Triäthylentetramin.

«Amin III» bedeutet N-(2-Aminoäthyl)-piperazin.

«Amin IV» bedeutet Isophorondiamin.

«Amin V» bedeutet N,N-Dimethylpropan-1,3-diamin.

«Amin VI» bedeutet m-Xylylendiamin.

«Amin VII» bedeutet Bis-(4-aminophenyl)-methan.

«Amin VIII» bedeutet ein aus dimerisierter Linolsäure und Triäthylentetramin hergestelltes Polyaminoamid. Dies wurde unter der Bezeichnung «Versamid 140» von Cray Valley Products Ltd., Orpington, Kent, England, bezogen. («Versamid» ist ein eingetragenes Warenzeichen.)

«Amin IX» bedeutet Cyclohexylamin.

Beispiel 1

Man vermischt Epoxidharz I (50 Teile) und einen wie in der nachfolgenden Tabelle angegebenen Ester (5 Teile) bei Raumtemperatur und misst die Viskosität bei 23°C. Dann gibt man Amin I (13 Teile) dazu und misst die Gelierzeit bei 20°C. Die Ergebnisse sind in Tabelle I angeführt.

Tabelle I

| Ester | Viskosität (Pa.s) | Gelierzeit (Minuten) |
|---|---|---|
| ohne (Kontrolle) | 17,8 | 65 |
| Diphenylcarbonat | 7,6 | 10 |
| Äthylenglykol-bis-(phenylcarbonat) | 9,8 | 14 |
| Bis-(2,4-dibromphenyl)-carbonat | 13,6 | 11 |
| tert.-Butyl-phenyl-carbonat | 17,1 | 43 |
| 2-Äthylhexyl-p-nonyl-phen-yl-carbonat | 8,1 | 30 |
| Bis-(p-nonylphenyl)-carbonat | 15,0 | 30 |
| isopropyliertes | | |

Tabelle I (Fortsetzung)

| Ester | Viskosität (Pa.s) | Gelierzeit (Minuten) |
|---|---|---|
| Diphenyl-carbonat* | 10,0 | 12,5 |
| m-Kresyl-phenylcarbonat | 10,0 | 12 |
| Neopentylglykol-bis-(phenylcarbonat) | 7,7 | 14 |
| Äthyl-phenylcarbonat | 4,0 | 12 |

* Dieses Material ist ein sich von einem Gemisch der ungefähren Zusammensetzung 40% o-Isopropylphenol, 30% Phenol und 10% p-Isopropylphenol ableitendes Carbonat, wobei der Rest hauptsächlich aus 2,6-Diisopropylphenol, 2,4-Diisopropylphenol und 2,4,6-Triisopropylphenol besteht.

Für Vergleichszwecke wird ein Versuch mit von den Estern der Formel I verschiedenen Verdünnungsmitteln durchgeführt. Diese Verdünnungsmittel (5 Teile) werden mit Epoxidharz 1 (50 Teile) vermischt, und Amin I wird dann in der angegebenen Menge dazugesetzt. Die Ergebnisse sind in Tabelle II angeführt.

Tabelle II

| Verdünnungsmittel | Amin I (Teile) | Viskosität (Pa.s) | Gelierzeit (Minuten) |
|---|---|---|---|
| Dibutylphthalat | 10,5 | 5,0 | 105 |
| Dibenzyl-carbonat | 13,0 | 4,8 | 168 |
| Kresyl-glycidyl-äther | 11,5 | 5,1 | 76 |
| Isooctyl-glycidyl-äther | 11,5 | 2,8 | 93 |

Diese Ergebnisse zeigen, dass der Zusatz dieser Materialien, die sowohl «aktive» als auch inerte Verdünnungsmittel einschliessen, die Härtungsgeschwindigkeit des Harzes erheblich verlangsamen.

Beispiel 2

Man vermischt Epoxidharz I (50 Teile) und Diphenylcarbonat (5 Teile) und bringt sie mit einem Aminhärter der in Tabelle III angegebenen Art und Menge zusammen. Dann werden die Gelierzeiten bei 20°C gemessen, und die Ergebnisse sind in Tabelle III angeführt.

Tabelle III

| Härter | | Gelierzeit (Minuten) | |
|---|---|---|---|
| Typ | Menge (Teile) | ohne Beschleuniger (Kontrolle) | mit Diphenyl-carbonat |
| Amin II | 6 | 36 | - |
| Amin II | 7 | - | 4 |
| Amin III | 10,5 | 17 | - |

Tabelle III (Fortsetzung)

| Härter | | Gelierzeit (Minuten) | |
|---|---|---|---|
| Typ | Menge (Teile) | ohne Beschleuniger (Kontrolle) | mit Diphenyl-carbonat |
| Amin III | 3 | - | 4 |
| Amin IV | 11,5 | 108 | - |
| Amin IV | 15 | - | 15 |
| Amin V | 5 | 87 | 12 |
| Amin VI | 9 | 64 | - |
| Amin VI | 11 | - | 9 |
| Amin VII + Amin I | 12 +2,6 | 404 | - |
| Amin VII + Amin I | 16 +3,7 | - | 214 |
| Amin VIII | 25 | 198 | 43 |

Für Vergleichszwecke wird dieser Versuch wiederholt, jedoch unter Verwendung von 5 Teilen eines ausschliesslich tertiären Amins, das gleichzeitig ein Phenol ist, nämlich Tris-(dimethylaminomethyl)-phenol, als Härter, d.h. einer Masse, die nicht in den Rahmen der vorliegenden Erfindung fällt. Ohne Zusatz eines erfindungsgemässen Beschleunigers geliert die dieses Amin enthaltende Masse nach 63 Minuten. Bei weiterem Zusatz von 5 Teilen Diphenylcarbonat geliert die Masse nach 70 Minuten. Der Zusatz des Esters verursachte also eine Verzögerung der Härtung durch dieses spezielle tertiäre Amin.

Beispiel 3

Man verfährt wie in Beispiel 1, unter Verwendung von 50 Teilen Epoxidharz II anstelle von Epoxidharz I. Die Menge Amin I bzw. Amin IX und die erhaltenen Ergebnisse sind in Tabelle IV angeführt.

Tabelle IV

| Ester | Amin I (Teile) | Amin IX (Teile) | Gelierzeit (Minuten) |
|---|---|---|---|
| ohne (Kontrolle) | 16 | - | 189 |
| Diphenylcarbonat | 18,5* | - | 17 |
| ohne (Kontrolle) | - | 21,5 | 2 343 |
| Diphenylcarbonat | - | 24* | 900 |

* Die bei Gegenwart von Diphenylcarbonat eingesetzte Menge Amin ist grösser als die in Abwesenheit von Diphenylcarbonat, um die bei der Freisetzung des Phenols verbrauchte Menge zu kompensieren.

Es ist also ersichtlich, dass die Härtung des Epoxidharzes II mit den beiden Aminen durch den Ester der Formel I erheblich beschleunigt wird.

Beispiel 4

Man verfährt wie in Beispiel 1, jedoch unter

Verwendung von 50 Teilen Epoxidharz I, 18 Teilen Amin I und 10 Teilen Diphenylcarbonat. Das Harz/Estergemisch weist eine Viskosität von 5,95 Pa.s bei 23°C auf, und das Gemisch aller drei Komponenten geliert nach 5 Minuten bei 20°C.

Beispiel 5

Man vermischt Epoxidharz I (50 Teile) bei Raumtemperatur mit Bis-(phenoxycarbonyloxy)-poly-(oxypropylen) (5 Teile; Molekulargewicht ungefähr 1750). Die Viskosität dieses Gemisches ist 13,6 Pa.s, gemessen bei 23°C. Dann gibt man Amin I (11 Teile) dazu, und die Gelierzeit bei 20°C ergibt sich als 66 Minuten.

Es ist bekannt, dass beim Einbau eines langkettigen Moleküls in ein gehärtetes Harz die Gebrauchseigenschaften, insbesondere die Zähigkeit, verbessert werden, aber die zur Aushärtung erforderliche Zeit verlängert ist. Für Vergleichszwecke wird dieser Versuch wiederholt, jedoch unter Ersatz des Bis-(phenoxycarbonyloxy)-poly-(oxypropylens) mit einer gleichen Gewichtsmenge Bis-(glycidyloxy)-poly-(oxypropylen) mit einem Molekulargewicht von ungefähr 1600, d.h. dem Diglycidyläther des polymeren Diols anstelle seines Bis-(phenylcarbonats).

Auf diese Weise lässt sich dieselbe lange Kette in das gehärtete Molekül einbauen. Die bei 23°C gemessene Viskosität dieses Gemischs von Harzen beträgt 8,8 Pa.s, und die Gelierzeit bei 20°C ist 90 Minuten.

Beim Vergleich dieser Ergebnisse sowie der in Beispiel 1 für das unmodifizierte Gemisch aus Epoxidharz I und Amin I beschriebenen Ergebnisse ist ersichtlich, dass die Zugabe des langkettigen Polyol-bis-carbonats die Viskosität erniedrigt hat, ohne die Gelierzeit merklich zu beeinträchtigen. Bei Einbau dieser langen Kette in der herkömmlichen Weise durch Zugabe als Diglycidyläther ist die Viskosität wiederum erniedrigt, aber die Gelierzeit ist viel länger.

Beispiel 6

Man vermischt Epoxidharz III (50 Teile) bei Raumtemperatur mit 15,5 Teilen Amin I; die Gelierzeit ist 45 Minuten. In einem weiteren Versuch vermischt man Epoxidharz III (50 Teile) mit Diphenylcarbonat (5 Teile), rührt bei 60°C, bis das Gemisch homogen ist, und kühlt dann auf Raumtemperatur ab. Dann versetzt man mit Amin I (19 Teile, d.h. es wird eine grössere Menge eingesetzt, um das bei der Freisetzung des Phenols verbrauchte Amin zu kompensieren); die Gelierzeit ist 7½ Minuten.

Beispiel 7

Man vermischt Epoxidharz IV (50 Teile) bei Raumtemperatur mit 12,5 Teilen Amin I; die Gelierzeit ist 115 Minuten. Der zweite Teil von Beispiel 6 wird mit 50 Teilen Epoxidharz IV, 16 Teilen Amin I und 5 Teilen Diphenylcarbonat wiederholt: dabei ist die Gelierzeit 10 Minuten.

**Patentansprüche**

1. Härtbare Massen, dadurch gekennzeichnet, dass sie aus (a) einem Ester der Formel

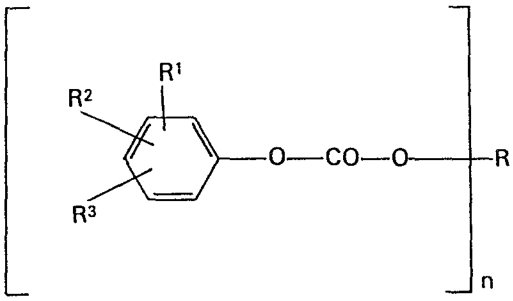

I

worin n eine ganze Zahl von 1 bis 6 ist, R den Rest eines Alkohols oder Phenols nach Wegnahme von n Hydroxylgruppen darstellt sowie $R^1$, $R^2$ und $R^3$, die gleich oder verschieden sein können, je ein Wasserstoffatom, ein Halogenatom oder eine geradkettige oder verzweigte Alkylgruppe mit 1 bis 10 Kohlenstoffatomen bedeuten, mit der Massgabe, dass ein oder zwei unter $R^1$, $R^2$ und $R^3$ auch für eine Acyloxygruppe mit 1 bis 10 Kohlenstoffatomen stehen können, (b) einem Amin mit mindestens zwei direkt an ein bzw. mehrere Stickstoffatom(e) gebundenen Wasserstoffatomen, wobei das bzw. die Stickstoffatom(e) ihrerseits direkt an ein bzw. mehrere aliphatische oder cycloaliphatische Kohlenstoffatom(e) gebunden sind, und (c) einem Epoxidharz bestehen.

2. Massen nach Anspruch 1, dadurch gekennzeichnet, dass sie ferner (d) ein von Amin (b) verschiedenes aromatisches Amin mit mindestens zwei direkt an ein bzw. mehrere Stickstoffatom(e) gebundenen Wasserstoffatomen trägt, wobei das bzw. die Stickstoffatom(e) direkt an ein bzw. mehrere zu einem aromatischen Ring gehörende Kohlenstoffatom(e) gebunden sind.

3. Massen nach Anspruch 1, dadurch gekennzeichnet, dass n 1 ist und R entweder (i) für eine Phenyl-, Alkyl-, Phenoxyalkylen- oder Phenoxycarbonyloxyalkylengruppe, wobei dieses Alkyl bzw. Alkylenteile jeweils 1 bis 10 Kohlenstoffatome aufweisen und geradkettig oder verzweigt sind oder (ii) eine Phenyl- oder Phenoxyalkylengruppe oder eine durch 1 bis 3 unter Halogenatomen und geradkettigen oder verzweigten Alkylgruppen mit jeweils 1 bis 3 Kohlenstoffatomen ausgewählten Substituenten substituierte Phenoxycarbonyloxyalkylengruppe steht, wobei diese Alkylenteile jeweils 1 bis 10 Kohlenstoffatome aufweisen und geradkettig oder verzweigt sind.

4. Massen nach Anspruch 1, dadurch gekennzeichnet, dass n 2 bis 6 ist und R für (iii) einen gesättigten oder ungesättigten aliphatischen Kohlenwasserstoffrest mit einem Molekulargewicht im Bereich von 28 bis 5000 oder (iv) eine Gruppe der Formel

$$R^4\left[(\text{O-Alkylen})_p\right]_q \qquad \text{II}$$

oder (v) eine Gruppe der Formel

$$-(\text{Alkylen-CO-O})_p-R^4-(\text{O-CO-Alkylen})_p- \quad \text{III}$$

worin jede «Alkylen»-gruppe eine Kette von mindestens 2 und höchstens 6 Kohlenstoffatomen zwischen aufeinanderfolgenden Sauerstoffatomen enthält, $R^4$ eine aliphatische Kohlenwasserstoffgruppe mit 2 bis 6 Kohlenstoffatomen bedeutet sowie p eine solche ganze Zahl, dass das Molekulargewicht der Gruppen der Formel II und III im Bereich 200 bis 5000 liegt, und q eine ganze Zahl von 2 bis 6 ist, steht.

5. Massen nach Anspruch 1, dadurch gekennzeichnet, dass n entweder 2 ist, in welchem Fall dann R für Neopentylen, einen Polyoxypropylenrest oder einen Polybutadienrest steht, oder n 3 ist, in welchem Fall R dann für einen Glyceryl- oder Polyoxypropylentriolrest steht.

6. Massen nach Anspruch 1, dadurch gekennzeichnet, dass als Ester der Formel I Bis-(2,4-dibromphenyl)-carbonat, tert.-Butylphenylcarbonat, 2-Äthylhexyl-p-nonylphenylcarbonat, Bis-(nonylphenyl)-carbonat, ein Gemisch von Bis-(isopropylphenyl)-carbonaten mit jeweils durch eins bis drei Isopropylgruppen substituierten Phenylringen, Diphenylcarbonat, Bis-(phenoxycarbonyloxy)-polybutadien, Bis-(phenoxycarbonyloxy)-poly-(oxypropylen), Bis-(phenoxycarbonyloxy)-poly-(oxytetramethylen) oder Tris-(phenoxycarbonyloxy)-poly-(oxypropylen) vorliegt.

7. Massen nach Anspruch 1, dadurch gekennzeichnet, dass sie insgesamt 0,75 bis 4 Aminowasserstoffäquivalente des Amins (b) sowie gegebenenfalls des aromatischen Amins (d) pro 1,2-Epoxidäquivalent des Epoxidharzes enthalten.

8. Massen nach Anspruch 1, dadurch gekennzeichnet, dass sie 2 bis 50 Gewichtsteile Ester der Formel I pro 100 Gewichtsteile Epoxidharz enthalten.

9. Die aus den Massen nach Anspruch 1 bis 8 durch Härtung erhaltenen Formstoffe, Beschichtungen oder Verklebungen.

**Claims**

1. A curable composition comprising (a) an ester of the formula

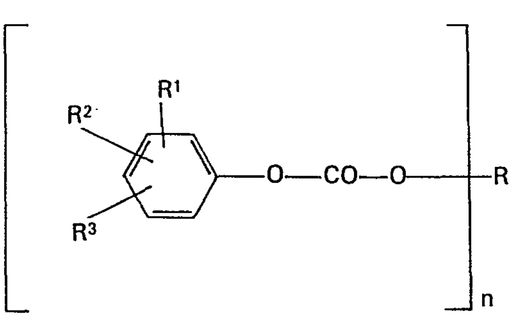 I

wherein
n is an integer from 1 to 6,
R is the residue, after removal of n hydroxy groups, of an alcohol or a phenol,
$R^1$, $R^2$ and $R^3$ may be the same or different and are each a hydrogen atom, a halogen atom or a straight chain or branched alkyl group containing 1 to 10 carbon atoms, with the proviso that one or two of $R^1$, $R^2$ and $R^3$ may alternatively be an acyloxy group containing 1 to 10 carbon atoms, (b) an amine having at least two hydrogen atoms directly attached to one or more nitrogen atoms, which nitrogen atom or atoms is or are in turn directly attached to an aliphatic or cycloaliphatic carbon atom or atoms, and (c) an epoxide resin.

2. A composition according to claim 1, which further contains (d) an aromatic amine, other than an amine (b), which has at least two hydrogen atoms directly attached to a nitrogen atom or atoms, which nitrogen atom or atoms is or are attached directly to a carbon atom or atoms which forms or form part of an aromatic ring.

3. A composition according to claim 1, in which n is 1 and R is either
i) a phenyl, alkyl, phenoxyalkylene or phenoxycarbonyloxyalkylene group, said alkyl and alkylene moieties each containing 1 to 10 carbon atoms and being straight chain or branched, or
ii) a phenyl, phenoxyalkylene group, or a phenoxycarbonyloxyalkylene group substituted by 1 to 3 substituents selected from halogen atoms and from straight chain or branched alkyl groups, each containing 1 to 3 carbon atoms, said alkylene moieties each containing 1 to 10 carbon atoms and being straight chain or branched.

4. A composition according to claim 1, in which n is from 2 to 6 and R is
iii) a saturated or unsaturated aliphatic hydrocarbon radical which has a molecular weight in the range from 28 to 5000, or
iv) a group of formula

$$R^4-\left[(\text{O-Alkyle})_p-\right]_q \quad \text{II}$$

or v) a group of formula

$$-(\text{alkylene-CO-O})_p-R^4-(\text{O-CO-alkylene})_p- \quad \text{III}$$

wherein
each "alkylene" group contains a chain of at least 2 and at most 6 carbon atoms between consecutive oxygen atoms,
$R^4$ is an aliphatic hydrocarbon group containing 2 to 6 carbon atoms, p is an integer such that the molecular weight of the groups of formulae II and III are in the range from 200 to 5000, and q is an integer from 2 to 6.

5. A composition according to claim 1, in which n is either 2, in which case R is neopentylene, a polyoxypropylene residue, or a polybutadiene residue, or n is 3, in which case R is a glyceryl or polyoxypropylene triol residue.

6. A composition according to claim 1, in which the ester of formula I is bis(2,4-dibromophenyl) carbonate, tert-butyl phenyl carbonate, 2-ethylhexyl p-nonylphenyl carbonate, bis(nonylphenyl) carbonate, a mixture of bis(isopropylphenyl) carbonates, each phenyl ring being substituted by one to three isopropyl groups, diphenyl carbonate, bis(phenoxycarbonyloxy) polybutadiene, bis(phenoxycarbonyloxy) poly(oxypropylene), bis(phenoxycarbonyloxy) poly(oxytetramethylene), or tris(phenoxycarbonyloxy) poly(oxypropylene).

7. A composition according to claim 1, which contains a total of 0.75 to 4 amino-hydrogen equivalents of the amine (b), and the aromatic amine (d) if present, per 1,2-epoxide equivalent of the epoxide resin.

8. A composition according to claim 1, which contains 2 to 50 parts by weight of the ester of formula I per 100 parts by weight of the epoxide resin.

9. A moulded material, coating or bond obtained by curing a composition according to any one of claims 1 to 8.

**Revendications**

1. Compositions durcissables caractérisées en ce qu'elles sont constituées a) d'un ester de formule

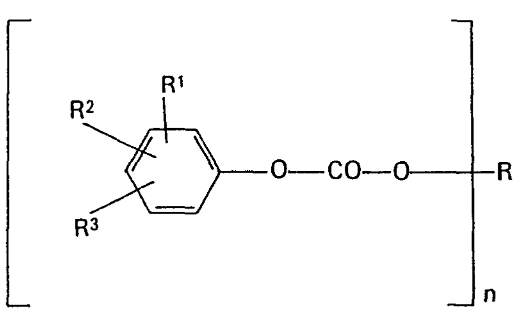 I

dans laquelle n est un nombre entier de 1 à 6, R est le radical obtenu à partir d'un alcool ou d'un phénol après abstraction de n groupes hydroxyles, $R^1$, $R^2$ et $R^3$, qui peuvent être identiques ou différents, représentent chacun un atome d'hydrogène, un atome d'halogène, ou un radical alkyle linéaire ou ramifié, ayant de 1 à 10 atomes de carbone, à condition que 1 ou 2 des radicaux $R^1$, $R^2$, $R^3$ puissent aussi représenter un radical alcoxy ayant de 1 à 10 atomes de carbone, b) d'une amine comportant au moins deux atomes d'hydrogène directement portés par un ou plusieurs atomes d'azote, ce ou ces atomes d'azote étant eux-mêmes directement portés par un ou plusieurs atomes de carbone aliphatiques ou cycloaliphatiques et c) d'une résine époxydique.

2. Compositions selon la revendication 1, caractérisées en ce qu'elles comportent en plus d) une amine aromatique différente de b) ayant au moins deux atomes d'hydrogène portés par un ou plusieurs atomes d'azote, ce ou ces atomes d'azote étant eux-mêmes portés par un ou plusieurs atomes de carbone appartenant à un noyau aromatique.

3. Compositions selon la revendication 1, caractérisées en ce que n est égal à 1 et R représente soit i) un radical phényle, alkyle, phénoxyalkylène ou phénoxycarbonyloxyalkylène, les parties alkyles ou alkylènes comportant toujours de 1 à 10 atomes de carbone et étant linéaires ou ramifiées, soit ii) un radical phényle ou phénoxyalkylène, ou encore un radical phénoxycarbonyloxyalkylène qui porte de 1 à 3 substituants choisis parmi les atomes d'halogène et les radicaux alkyles linéaires ou ramifiés qui contiennent de 1 à 3 atomes de carbone, les parties alkylènes contenant de 1 à 10 atomes de carbone et étant linéaires ou ramifiées.

4. Compositions selon la revendication 1, caractérisées en ce que n est compris entre 2 et 6 et R représente iii) un radical hydrocarbure aliphatique saturé ou non saturé ayant une masse moléculaire comprise entre 28 et 5000 ou iv) un radical de formule

$$R^4 - \left[ (-O-\text{Alkylen})_p \right]_q - \qquad \text{II}$$

ou v) un radical de formule

$$-(-\text{Alkylen}-CO-O-)_p - R^4 - (-O-CO-\text{Alkylen}-)_p - \qquad \text{III}$$

formules dans lesquelles chaque radical «alkylène» contient une chaîne d'au moins deux et d'au plus six atomes de carbone entre deux atomes d'oxygène successifs, $R^4$ représente un radical hydrocarbure contenant de deux à six atomes de carbone, p est un nombre entier tel que la masse moléculaire des radicaux de formules II et III soit comprise entre 200 et 5000, et q est un nombre entier de 2 à 6.

5. Compositions selon la revendication 1, caractérisées en ce que soit n est égal à 2 et R représente un radical de néopentylène, de polyoxypropylène ou de polybutadiène, soit n est égal à 3 et R représente un radical glycéryle ou de polyoxypropylènetriol.

6. Compositions selon la revendication 1, caractérisées en ce que l'ester de formule I est le bis-(dibromo-2,4-phényl)-carbonate, le tert.-(butylphénylcarbonate), l'éthyl-2-hexyl-p-nonylphénylcarbonate, le bis-(nonylphényl)carbonate, un mélange de bis-(isopropylphényl)carbonate comportant des noyaux phényles substitués par de 1 à 3 radicaux isopropyle, le diphénylcarbonate, le bis-(phénoxycarbonyloxy) polybutadiène, le bis-(phénoxycarbonyloxy)-poly-(oxypropylène), le bis-(phénoxycarbonyloxy)-poly-(oxytétraméthylène) ou le tris-(phénoxycarbonyloxy)-poly-(oxypropylène).

7. Compositions selon la revendication 1, caractérisées en ce qu'elles contiennent en tout de 0,75 à 4 équivalents d'hydrogène du groupe amino de l'amine b) et éventuellement de l'amine d) par équivalent époxy-1,2 de la résine époxydique.

8. Compositions selon la revendication 1, caractérisées en ce qu'elles contiennent de 2 à 50

parties pondérales d'éther de formule I pour 100 parties pondérales de résine époxydique.

9. Les objets moulés, les enduits et les encollages obtenus par durcissement des compositions selon l'une quelconque des revendications 1 à 8.